# EUROPEAN PATENT APPLICATION

(11) **EP 2 950 248 A1**
(43) Date of publication of application: **02.12.2015**
(21) Application number: 15154105.9
(22) Date of filing: 06.02.2015
(51) Int. Cl.: G06Q 10/06

(54) **KPI specification apparatus and KPI specification method**

(30) Priority: 30.05.2014 JP 2014111928
(71) Applicant: Hitachi, Ltd., Tokyo 100-8280 (JP)
(72) Inventor: Saito, Motonobu, Tokyo, 100-8280 (JP); Yano, Kojin, Tokyo, 100-8280 (JP); Hirasawa, Shigeki, Tokyo, 100-8280 (JP); Takahashi, Masato, Tokyo, 100-8280 (JP)
(74) Representative: MERH-IP Matias Erny Reichl Hoffmann

(57) **Abstract**

An object of the present invention is to provide a method of calculating a correlation level for each combination between a city indicator and an infrastructure indicator and selecting a city indicator as an issue of a corresponding city to calculate an infrastructure KPI of the city as well as an importance level. Provided is a configuration that includes: a calculation processing unit that processes received data; and a storage device (303) that is connected to the calculation processing unit and stores a plurality of city indicators and a plurality of infrastructure indicators for each city. The calculation processing unit is configured to calculate a correlation level between a designated city indicator among the plurality of city indicators and an infrastructure indicator related to the designated city indicator, and add up the correlation levels for each of the infrastructure indicators to calculate an importance level (390b).

## Description

### BACKGROUND OF THE INVENTION

### 1. Field of the Invention

The present invention relates to a key performance indicator (KPI) specification method for specifying an infrastructure KPI, and more particularly relates to a method of calculating a correlation level of each combination between a city indicator and an infrastructure indicator and selecting a city indicator to calculate an importance level of each infrastructure indicator from a combination of the city indicator, the infrastructure indicator, and the correlation level.

### 2. Description of the Related Art

Recently, various city based concepts, such as smart city and eco city, have been established to make a city a better place to live in without harming the global environment, and various attempts have also been made to put the concepts into practice. In order to make the city a better place to live in, accurate understanding of the current situation of the city is essential and various city indicators have been therefore proposed. Furthermore, infrastructure (city infrastructure) such as energy, water, transportation, waste treatment, and information and communication technology are considered as another important factor to make a city a better place to live in, and various infrastructure indicators have also been proposed for accurate understanding of the current situation of the infrastructure.

Unfortunately, the approach to evaluate the infrastructure of the city with the infrastructure indicator is often considered cumbersome due to the vast number of indicators, which could be around 100. Furthermore, the meaningful evaluation with the infrastructure indicator is difficult because the infrastructure is merely a part of many factors to make the city a better place to live in, and what the city actually needs is a solution for an issue of the city.

Thus, in "Global City Indicators Program Report Annexes, http://www.cityindicators.org/Deliverables/Indicators%20Report %204-7-08%20final%20Annexes%20compressed_4-23-2008-938441.pdf, p4-2", city indicators, including infrastructure indicators for evaluating the infrastructure, are used, and the correlations are laid out so that a city issue corresponding to each indicator can be figured out.

Japanese Patent Application Laid-open No. 2003-296539 discloses a decision making support method for evaluating companies rather than cities and infrastructures. Specifically, management indicator data is generated from financial data of a company. Then, by referring to an industry ID indicating the industry of the company, an average value in a management indicator item, corresponding to a type of industry of the company, is extracted from an industry average recording unit based on the industry ID. Whether the management indicator data of the company falls behind the extracted average is determined for each indicator item, and management task information, corresponding to the indicator item with management indicator data falling behind the average, is extracted. Thus, scenario data, corresponding to the extracted management task, is extracted from a scenario recoding unit to be output.

### SUMMARY OF THE INVENTION

The technique described in "Global City Indicators Program Report Annexes, http://www.cityindicators.org/Deliverables/Indicators%20Report %204-7-08%20final%20Annexes%20compressed_4-23-2008-938441.pdf, p4-2", presents a presence of a correlation between the issue of the city and the infrastructure indicator related to the solution for the issue, but fails to cover the quantitative ground of the presence of the correlation and the level of the correlation present. Thus, priorities for specifying an infrastructure indicator (KPI) to be evaluated from a number of infrastructure indicators are difficult to determine. Furthermore, quantitative analysis on the correlation, including the priorities, requires an automatic process because the number of combinations is extremely large.

The technique in Japanese Patent Application Laid-open No. 2003-296539 specifies the management task corresponding to the management indicator data of the company falling behind the industry average. Thus, the technique is directed in a different direction in the first place, because the task is obtained from the indicator and not the other way around. The field of management/financial analysis on companies is based on a certain level of obviousness of the correlation between the task and the indicator, and predetermined correlation between each indicator and the corresponding task. Thus, the problem of the present invention cannot be solved with the technique. Furthermore, failure to acquire the indicator value, as another potential problem in the evaluation for the infrastructure, is extremely unlikely to occur in the field of management/financial analysis for companies.

An object of the present invention is to provide a method of calculating a correlation level for each combination between a city indicator and an infrastructure indicator and selecting a city indicator as an issue of a corresponding city to calculate an infrastructure KPI of the city as well as an importance level.

Problems, configurations, and effects other than those described above will become apparent in an embodiment described below.

To achieve the object described above, a configuration is provided that includes: a calculation processing unit that processes received data; and/or a storage device that is connected to the calculation processing unit and stores a plurality of city indicators and a plurality of infrastructure indicators for each city, in which the calculation processing unit calculates a correlation level between a designated city indicator among the plurality of city indicators and an infrastructure indicator related to the designated city indicator, and/or adds up the correlation levels for each of the infrastructure indicators to calculate an importance level.

The present invention can provide a method of calculating a correlation level for each combination between a city indicator and an infrastructure indicator and selecting a city indicator as an issue of a city to calculate an infrastructure KPI of the city as well as an importance level.

### BRIEF DESCRIPTION OF THE DRAWINGS

Fig. 1 is a diagram showing an entire configuration of a KPI specification system;
Fig. 2 is a diagram showing a configuration of a city name management DB;
Fig. 3 is a diagram showing a configuration of a source data management DB;
Fig. 4 is a diagram showing a configuration of a calculation formula management DB;
Fig. 5 is a diagram showing a configuration of an indicator value management DB;
Fig. 6 is a diagram showing a configuration of a correlation level management DB;
Fig. 7 is a diagram showing a configuration of a KPI management DB;
Fig. 8 is a diagram showing a correlation display screen;
Fig. 9 is a flowchart of indicator value calculation processing;
Fig. 10 is a flowchart of KPI specification processing;
Fig. 11 is a simplified diagram related to clustering processing; and
Fig. 12 is a simplified diagram related to the clustering processing after normalization.

### DESCRIPTIPN OF THE PREFFERED EMBODIMENTS

An embodiment of the present invention and the like are described below with reference to the drawings.

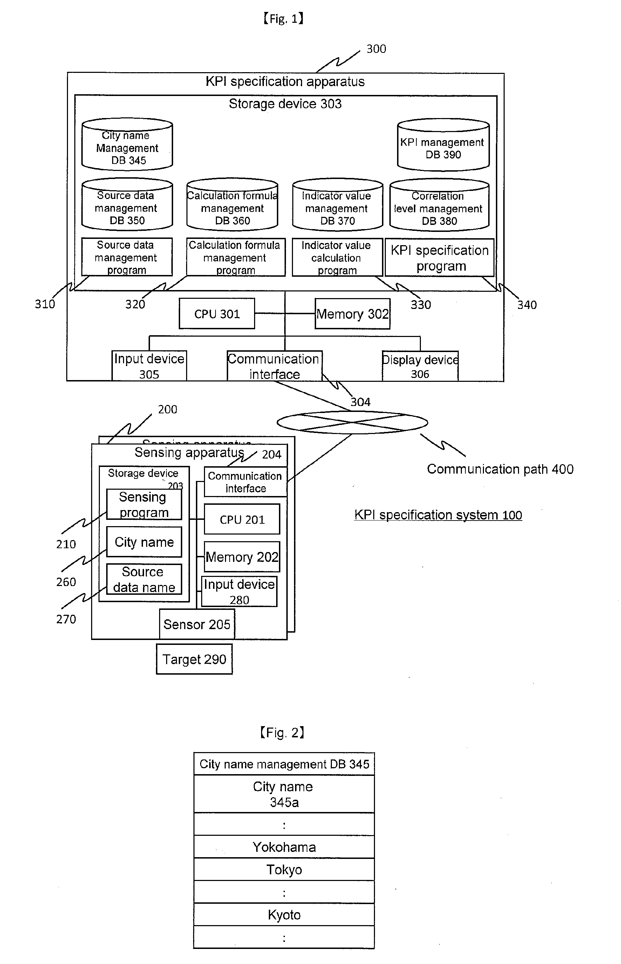

Fig. 1 is a diagram showing an entire configuration of a KPI specification system 100 as an exemplary embodiment of the present invention. The KPI specification system 100 includes a KPI specification apparatus 300, at least one sensing apparatus 200, and a communication path 400 that connects between the apparatuses.

For example, the communication path 400 is a communication path of a certain type such as a wired local area network (LAN) or a wireless LAN, or a mobile phone network.

For example, the sensing apparatus 200 is a personal computer (PC), a laptop PC, a mobile phone, or the like provided with an internal or external sensor (such as a power meter, a traffic flow meter, a water quality meter, a nitrogen oxide concentration meter, or a noise meter). The sensing apparatus 200 at least includes a central processing unit (CPU) 201 that performs calculation processing, a memory 202, a storage device 203, a communication interface 204, and a sensor 205. For example, the communication interface 204 is an interface such as a wired LAN card or a wireless LAN card or a mobile phone antenna, and communicates with the KPI specification apparatus 300 through the communication path 400. The sensor 205, which is, for example, the power meter, the traffic flow meter, the water quality meter, the nitrogen oxide concentration meter, the noise meter, or the like, reads sensing data (such as electric power amount data, traffic flow data, water quality data, nitrogen oxide concentration data, or noise data) from a target 290. For example, the storage device 203 is a device such as a hard disk or a flash memory that stores at least a sensing program 210 as a program and a city name 260 and a source data name 270 as data.

The city name 260 indicates the name of a city, as a target of sensing (acquisition of the sensing data) by the sensing apparatus 200, set in advance by an input device 280 and the like.

The source data name 270 indicates the name (such as electric power amount, traffic flow, water quality, nitrogen oxide concentration, or noise) of data to be read by the sensing apparatus 200, set in advance by the input device 280 and the like.

The sensing program 210 is a program for reading the sensing data with the sensor 205, generating source data by adding the city name 260, the source data name 270, and sensing date and time to the sensing data, and notifying the KPI specification apparatus 300 of the source data through the communication interface 204. The sensing program 210 is loaded onto the memory 202 to be executed by the CPU 201, whereby the processing described above is executed. The source data is data as a source of indicator value calculation described later, and is data obtained by adding the city name, the source data name, and the sensing date and time to the sensing data as described above.

For example, the KPI specification apparatus 300 is an apparatus such as a PC, and manages the source data of a plurality of cities. The KPI specification apparatus 300 calculates indicator values from the source data and manages the indicator values. The KPI specification apparatus 300 calculates correlation levels of all combinations between the indicators for evaluating cities and indicators for evaluating infrastructure. The KPI specification apparatus 300 specifies an infrastructure KPI for a city for which the KPI is to be specified, by using the correlation level. The KPI specification apparatus 300 at least includes a CPU 301, a memory 302, a storage device 303, a communication interface 304, an input device 305, and a display device 306. For example, the communication interface 304 is an interface such as a wired LAN card or a wireless LAN card, and communicates with the sensing apparatus 200 through the communication path 400. For example, the input device 305 is a device such as an input button, a keyboard, and a mouth, through which an apparatus operator performs various inputs to the KPI specification apparatus 300. For example, the display device 306 is a device such as a liquid crystal display on which a processing result is displayed to the apparatus operator by the KPI specification apparatus 300. For example, the storage device 303 is a device such as a hard disk, a flash memory, or the like that stores a program and data. The program at least includes a source data management program 310, a calculation formula management program 320, an indicator value calculation program 330, and a KPI specification program 340. The data at least includes a city name management DB 345, a source data management DB 350, a calculation formula management DB 360, an indicator value management DB 370, a correlation level management DB 380, and a KPI management DB 390.

The city name management DB 345 is data with which the KPI specification apparatus 300 manages the source data to thereby manage at least one name of a city as a target of indicator value management. The configuration of the city name management DB 345 is described later with reference to Fig. 2. Each record in the city name management DB 345 is set in advance by the input device 305 and the like, through the display on the display device 306.

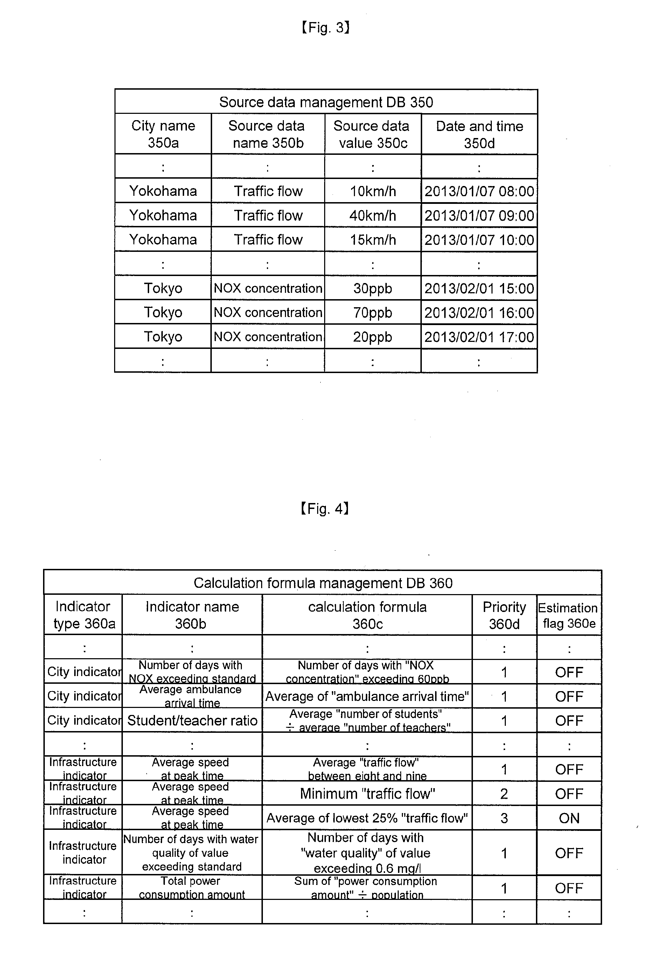

The source data management DB 350 is data for managing the source data of at least one city as the management target. The configuration of the source data management DB 350 is described later with reference to Fig. 3.

The calculation formula management DB 360 is data for managing calculation formulae for calculating the indicator values described later from the source data. The configuration of the calculation formula management DB 360 is described later with reference to Fig. 4.

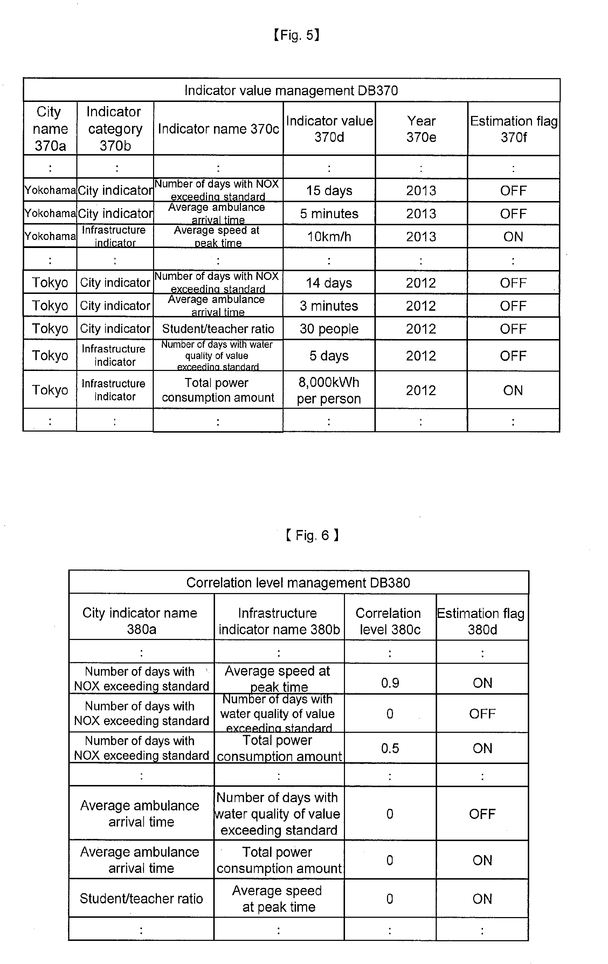

The indicator value management DB 370 is data for managing the indicator value calculated from the source data based on the calculation formula. The indicator value includes an indicator value as city indicator (such as GDP) for evaluating cities and an indicator value as infrastructure indicator (such as the outage rate and the coverage of the water supply system) for evaluating infrastructure. The configuration of the indicator value management DB 370 is described later with reference to Fig. 5.

The correlation level management DB 380 is data for managing a correlation level of each combination between the city indicator and the infrastructure indicator. The configuration of the correlation level management DB 380 is described later with reference to Fig. 6.

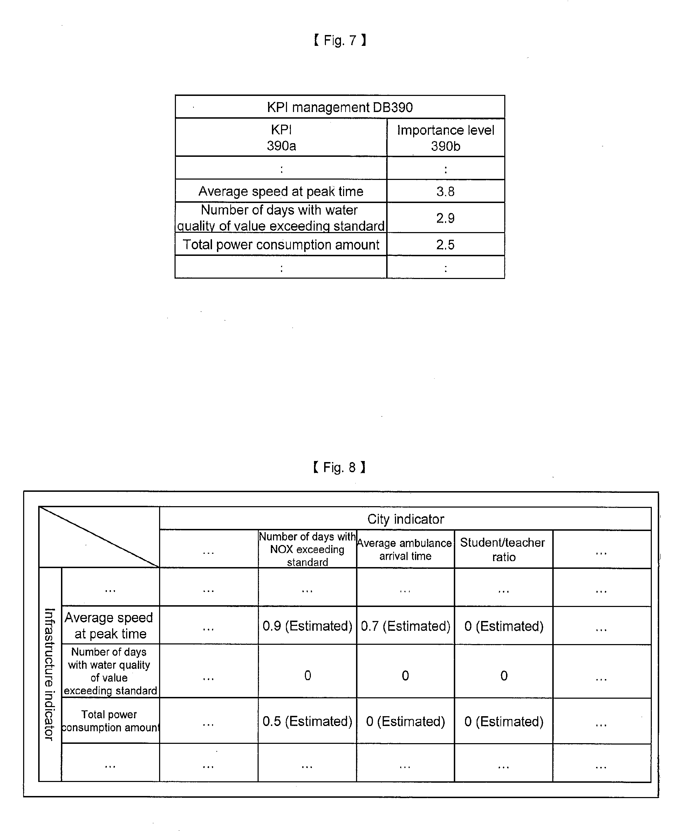

The KPI management DB 390 is data for managing infrastructure KPI, specified based on the correlation level, for a city for which the infrastructure KPI is to be specified. The configuration of the KPI management DB 390 is described later with reference to Fig. 7.

The source data management program 310 is a program for causing the CPU 301 to receive the source data generated by and notified from the sensing apparatus 200 through the communication interface 304, register the source data in the source data management DB 350, and display the source data on the display device 306 to be registered by the input device 305 and the like.

The calculation formula management program 320 is a program for causing the CPU 301 to display the calculation formula on the display device 306 to be registered by the input device 305 and the like.

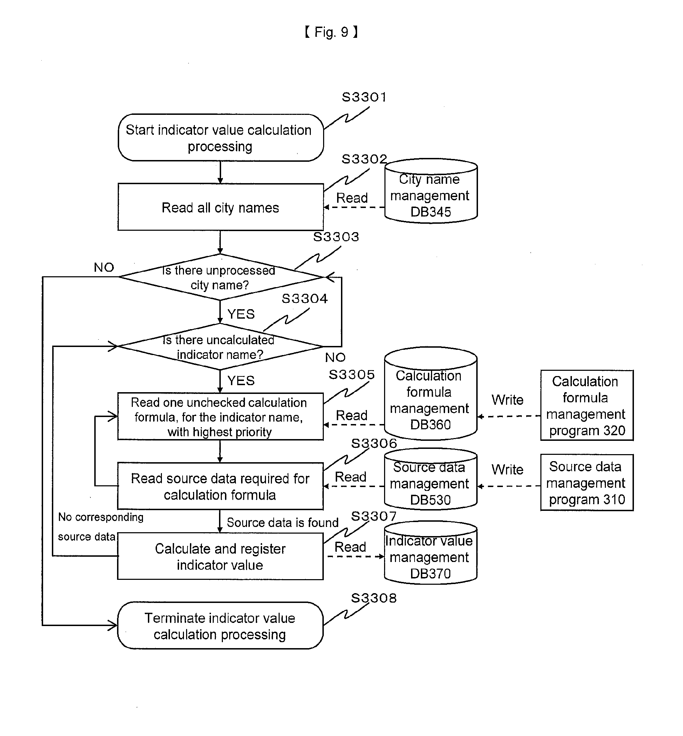

The indicator value management program 330 is a program for causing the CPU 301 to perform indicator value calculation processing. The indicator value calculation processing includes referring to the city name management DB 345, the calculation formula management DB 360, and the source data management DB 350 to calculate the indicator value, and registering the indicator value thus obtained in the indicator value management DB 370. The indicator value calculation processing is described in detail later with reference to Fig. 9.

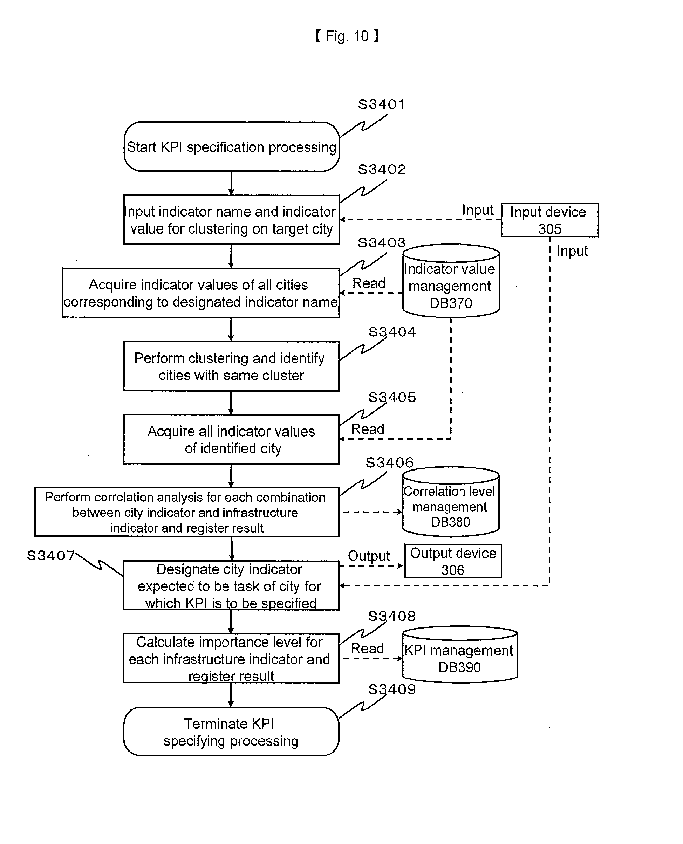

The KPI specification program 340 is a program for causing the CPU 301 to perform KPI specification processing. The KPI specification processing includes: referring to the indicator value management DB 370 to calculate the correlation level of each combination between the city indicator and the infrastructure indicator; registering the correlation level thus calculated in the correlation level DB 380; and registering, in the KPI management DB 390, the infrastructure KPI specified by using the correlation level for a city for which the infrastructure KPI is to be specified. The KPI specification processing is described in detail later with reference to Fig. 10.

The programs stored in the storage device 303 are each loaded onto the memory 302 to be executed by the CPU 301, whereby the corresponding processing is executed.

Fig. 2 is a diagram showing the configuration of the city name management DB 345 at least including the city name 345a as a field of a record.

As the city name 345a, at least one name of a city, for which the source data, that is, the indicator value is managed in the KPI specification apparatus 300, is set.

Fig. 3 is a diagram showing the configuration of the source data management DB 350. The source data management DB 350 at least includes a city name 350a, a source data name 350b, a source data value 350c, and date and time 350d, as fields of a record. The source data generated by the sensing apparatus 200 (sensing program 210) and notified to the KPI specification apparatus 300, and the source data input through the input device 305 are registered in each record.

The CPU 301 sets the city name, for which the sensing to read the source data has been performed, as the city name 350a.

The CPU 301 sets the name of the source data, such as "traffic flow" or "NOX concentration" for example, as the source data name 350b.

The CPU 301 sets a value of corresponding source data as the source data value 350c. For example, a value such as "10 km/h" is set for the source data name "traffic flow", and a value such as "30 ppb" is set for the source data name "NOX concentration".

The CPU 301 sets the date and time at which the source data has been generated as the date and time 350d. The city name 260, the source data name 270, sensing data, and the sensing date and time in the source data, generated in the sensing apparatus 200 and notified to the KPI specification apparatus 300, are respectively registered as the city name 350a, the source data name 350b, the source data value 350c, and the date and time 350d, of a new record.

Fig. 4 is a diagram showing the configuration of the calculation formula management DB 360 at least including an indicator type 360a, an indicator name 360b, a calculation formula 360c, a priority 360d, and an estimation flag 360e as fields of a record. A record is registered for each calculation formula.

The type of a corresponding calculation formula is set as the indicator type 360a. Specifically, a value "city indicator" is set for a calculation formula related to a city indicator for evaluating cities, and a value "infrastructure indicator" is set for a calculation formula related to an infrastructure indicator for evaluating infrastructure.

The name of an indicator, such as "average speed at peak time" or "number of days with NOX exceeding standard" for example, calculated by the corresponding calculation formula is set as the indicator name 360b.

The calculation formula for calculating the indicator value corresponding to the indicator name 360b is set as the calculation formula 360c. For example, "number of days with "NOX concentration" exceeding 60 ppb" is set as the calculation formula for the indicator name "number of days with NOX exceeding standard".

The number of calculation formulae set for a single indicator name is not limited to one and thus may be more than one. For example, for the indicator name "average speed at peak time", three calculation formulae including "average "traffic flow between eight and nine"", "minimum "traffic flow"", and "average of lowest 25% "traffic flow"" may be set.

As the priority 360d, the CPU 301 sets priorities of one or more calculation formulae set to a single indicator name, to be used in an ascending order with 1 set to the calculation formula with the highest priority.

As the estimation flag 360e, "OFF" is set when the CPU 301 uses a general method for calculating the indicator value with the calculation formula, and "ON" is set when the CPU 301 uses an estimation-based method for the calculation. The estimation-based method, calculating the indicator value by using another source data, is used as an alternative to the general method when the indicator value is difficult to calculate with the general method due to insufficient source data.

Fig. 5 is a diagram illustrating the configuration of the indicator value management DB 370 at least including a city name 370a, an indicator type 370b, an indicator name 370c, an indicator value 370d, a year 370e, and an estimation flag 370f as fields of a record. The CPU 301, executing the indicator value calculation program 330, registers information on the calculated indicator value in each record.

As the city name 370a, a city name corresponding to a corresponding indicator value is set.

As the indicator type 370b, the type of the indicator corresponding to the corresponding indicator value is set as in the case of the indicator type 360a.

As the indicator name 370c, the name of the indicator corresponding to the corresponding indicator value is set as in the case of the indicator name 360b.

As the indicator value 370d, the indicator value calculated by the CPU 301, executing the indicator value calculation program 330, is set.

As the year 370e, the year of the corresponding indicator value is set.

As the estimation flag 370f, "ON" is set when the estimation-based method has been used for calculating the indicator value and "OFF" is set when the calculation is performed in any other way, based on the estimation flag 360e.

Fig. 6 is a diagram illustrating the configuration of the correlation level management DB 380. The correlation level management DB 380 at least includes an indicator name 380a, an infrastructure indicator name 380b, a correlation level 380c, and an estimation flag 380d. Each record is set for each combination between the city indicator and the infrastructure indicator.

As the city indicator name 380a, the indicator name of the city indicator is set. The city indicator is an indicator for evaluating cities, and thus, the city indicator name 380a represents the indicator name 360b in the calculation formula management DB 360 with "city indicator" as the indicator type 360a.

As the infrastructure indicator name 380b, the indicator name of the infrastructure indicator is set. The infrastructure indicator is an indicator for evaluating infrastructure, and thus, the infrastructure indicator name 380b represents the indicator name 360b in the calculation formula management DB 360 with "infrastructure indicator" as the indicator type 360a.

As the correlation level 380c, the correlation level between the city indicator and the infrastructure indicator in the corresponding record is set. The correlation level will be described in detail later with reference to Fig. 10.

As the estimation flag 380d, "ON" is set when the correlation level is set with "ON" as the estimation flag 370f in the indicator value management DB 370, and "OFF" is set when the calculation is performed in any other way.

Fig. 7 is a diagram illustrating the configuration of the KPI management DB 390 at least including a KPI 390a and an importance level 390b as fields of a record. KPI information specified by the KPI specification program 340 is registered as appropriate in each record.

As the KPI 390a, the infrastructure KPI specified by the KPI specification program 340 is set. The KPI thus set is similar to the infrastructure indicator name 380b in the correlation level management DB 380.

As the importance level 390b, the importance level of the corresponding KPI is set. The importance level is described in detail later with reference to Fig. 10.

Fig. 8 is a diagram showing a correlation display screen displayed on the display device 360, as an excerpt version of data recorded in the correlation level management DB 380. The correlation levels 380c, each corresponding to a combination between the city indicator name 380a and the infrastructure indicator name 380b, are displayed in cells of the matrix with the horizontal axis representing the city indicator name 380a and the vertical line representing the infrastructure indicator name 380b. Here, a notification indicating the estimation is displayed when the estimation flag 380d of the corresponding record in the correlation level 380c is "ON".

Fig. 9 is a flowchart of the indicator value calculation processing through which the CPU 301 calculates the indicator value based on data managed in the city name management DB 345, the calculation formula management DB 360, and the source data management DB 350, under the indicator value calculation program 330. The indicator value thus obtained is registered in the indicator value management DB 370.

The processing is triggered by a processing execution instruction from the input device 305 or, for example, under an hourly schedule (S3301).

Under the indicator value calculation program 330, the CPU 301 reads out all the city names 345a from the city name management DB 345 (S3302), and performs the following processing on each of the city names 345a thus read (S3303). When there is no unprocessed city name 345a, the indicator value calculation processing is terminated (S3308).

The CPU 301 refers to the calculation formula management DB 360 and executes steps S3305, S3306, and S3307 described below for each indicator name 360b. When the city name 345a that has been processed no longer has an uncalculated indicator name 360b, the processing proceeds to step S3303 to be executed on the next city name 345a (S3304). When the processing reaches step S3304 for the first time, the processing automatically proceeds to step S3305.

In step S3305, the CPU 301 refers to the calculation formula management DB 360 to acquire a record with the calculation formula 360c having the highest priority 360d (that is, the priority 360d of a value closest to one) in the calculation formulae 360c that correspond to the indicator name 360b being processed and have not yet been checked in step S3306 described later. For example, when the indicator name 360b is "average speed at peak time", a record with ""traffic flow" between eight and nine" as the calculation formula 360c with 1 as the priority 360d is acquired. When the corresponding record is no longer newly acquirable, the indicator value of the indicator name is set to "null" to be registered in the indicator value management DB 370 through the processing as in step S3307.

Then, the CPU 301 refers to the source data management DB 350 to acquire the source data described in the calculation formula 360c of the record acquired in step S3305. For example, when the processing is performed for the city name "Yokohama", and the calculation formula 360c is ""traffic flow" between eight and nine", a record with "traffic flow" as the source data name 350b and time between eight and nine as the date and time 350d are acquired from source data management DB 350. Here, when there is no corresponding record to be acquired, the processing proceeds to step S3305 to be executed on the next calculation formula 360c (S3306).

Next, the CPU 301 executes the processing, related to the calculation formula 360c acquired in step S3305, for each year in the source data value350c of the record acquired in step S3306 and registers the result in the indicator value management DB 370 (S3307). Then, the processing proceeds to step S3304. Here, the corresponding city name 345a, the indicator type 360a and the indicator name 360b of the record acquired in step S3305, the indicator value calculated in step S3307, the year of the indicator value, and the estimation flag are respectively set as the city name 370a, the indicator type 370b, the indicator name 370c, the indicator value 370d, the year 370e, and the estimation flag 370f of the record registered in the indicator value management DB 370. The estimation flag 370f is set in the way described above with reference to Fig. 5 based on the estimation flag 360e. Specifically, "ON" is set when the indicator value is calculated by the estimation-based method and "OFF" is set when the calculation is performed in any other way.

Fig. 10 is a flowchart of the KPI specification processing. Under the KPI specification program 340, the CPU 310 calculates the correlation level and the KPI based on data managed in the indicator value management DB 370, and registers the correlation level and the KPI thus obtained in the correlation level management DB 380 and the KPI management DB 390, respectively. The CPU 301 receives an input from the input device 305 as appropriate, and displays the content of the input on the display device 306.

The processing is triggered by a processing execution instruction from the input device 305 or the like (S3401).

Then, the CPU 301 receives, from the input device 305, an input of at least one indicator name and an indicator name of the city corresponding to the indicator name for specifying a group of cities in the same cluster including the city for which the infrastructure KPI is to be specified, through clustering of a group of cities having various data pieces managed by the KPI specification apparatus 300 (S3402). The indicator names are selected from the indicator names 370c set in the indicator value management DB 370.

Then, the CPU 301 refers to the indicator value management DB 370 to acquire all the records corresponding to at least one indicator name designated in step S3402, regardless of the difference in the city name 370a. When a plurality records, with the same combination between the city name 370a and the indicator name 370c, are acquired, one of the records with the earliest year 370e is acquired (S3403).

Then, the CPU 301 acquires the city name 370a, the indicator name 370c, and the indicator value 370d from each record acquired in step S3403. A group of cities in the same cluster is specified by performing data clustering on the indicator values 370d (S3404) . The dimension of the data clustering corresponds to the number of types of the indicator name 370c. The data clustering employed herein may be one of various types of clustering such as Ward's method and k-means clustering.

A case where the k-means clustering is employed as the data clustering is described in detail. First, data A₀ = (a₀₁, ..., a₀ₙ) is generated. The dimension of the data A₀ corresponds to the number (= n) of indicator names input in step S3402. For example, when "number of days with NOX exceeding standard" and "average ambulance arrival time" have been selected as the indicator name 370c, A₀ is two-dimensional data with n = 2. The indicator values 370d corresponding to the indicator names 370c designated in step S3402 are stored in a₀₁, ..., a₀ₙ.

Next, n dimensional data pieces A₁ = (a₁₁, ..., a₁ₙ), ..., Aₘ = (aₘ₁, ..., aₘₙ) are generated for m records acquired in step S3403, with the same rule as that applied for A₀ applied to each record. The indicator values corresponding to the same indicator name are stored in each of dimensions of A₀, ..., Aₘ.

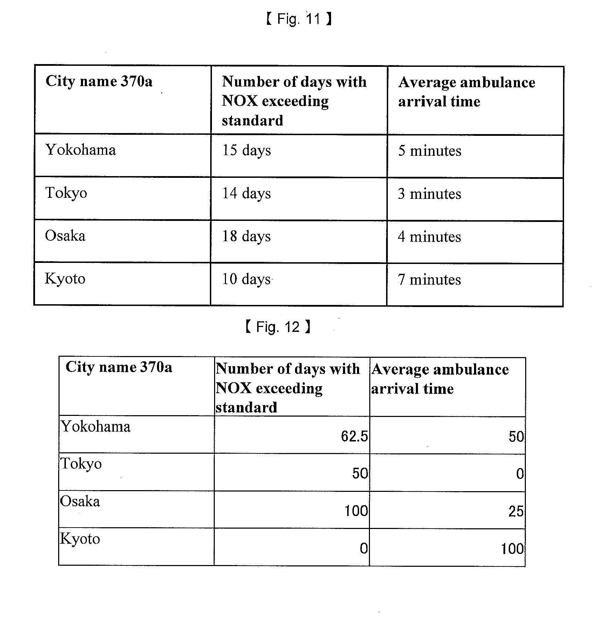

Fig. 11 is a diagram showing relationships between the indicator name 370c and the indicator value370d in the case where "number of days with NOX exceeding standard" and "average ambulance arrival time" have been selected as the indicator name 370c. For the sake of simplicity, only four cities are listed as the city name 370a. Here, A₀ = (15, 5), A₁ = (14, 3), A₂ = (18, 4), and A₃ = (10, 7).

Next, for A₀, ..., Aₘ, the maximum value aⱼ₍ₘₐₓ₎ and the minimum value aⱼ₍ₘᵢₙ₎ of each dimension are specified to normalize the values to be in the range of 0 to 100 for each dimension (j = 1 to n). Thus, Aᵢⱼ = (aᵢⱼ - aⱼ₍ₘᵢₙ₎) × 100 / (maximum value aⱼ₍ₘₐₓ₎ - minimum value aⱼ₍ₘᵢₙ₎) is calculated for all the combinations between i = 0 to m and j = 1 to n, whereby aᵢⱼ in A₀, ..., Aₘ is replaced with Aᵢⱼ. In the example shown in Fig. 11, the maximum value and the minimum value of number of days with NOX exceeding standard with j = 1 are a₁₍ₘₐₓ₎ = 18 and a₁₍ₘᵢₙ₎ = 10, respectively, whereby A₀₁ = (15 - 10) × 100 / (18 - 10) = 62.5. Fig. 12 shows the results of the calculation described above.

Then, the number K of cluster segments are specified, and the cluster numbers (1 to K) are randomly allocated to A₀, ..., Aₘ. Then, for each cluster, the centroid Vₖ (k = 1 to K) as the arithmetic average of the values of the dimension is obtained. Then, each of A₀, ..., Aₘ has a Euclidean distance to the centroid Vₖ (k = 1 to K) calculated to be reallocated with the cluster number of the centroid Vₖ with the closest Euclidean distance. When the cluster numbers are not to be reallocated to all of A₀, ..., Aₘ, the clustering is terminated, and the processing to obtain the centroids Vₖ is repeated when the clustering is not to be terminated.

Thus, n dimensional data in the same cluster as A₀ is data on the group of cities in the same clusters. Instead of designating the number K of the cluster segments as described above, a default value 2 may be stored in advance to be used. Furthermore, X-means clustering, in which the number of cluster segments is not specified but is appropriately estimated, has been developed and thus may be used.

Then, the CPU 301 refers to the indicator value management DB 370 for at least one city identified as being in the same cluster in step S3404, to acquire all the records corresponding the city name 370c of the at least one city. When a plurality of records with the same combination between the city name 370a and the indicator name 370c are acquired, one of the records with the earliest year 370e is acquired (S3405).

Then, the CPU 301 acquires the indicator type 370b, the indicator name 370c, and the indicator value 370d from the record acquired in step S3405, and performs correlation analysis for each combination between the city indicator name and the infrastructure indicator name. The result thus obtained is registered in the correlation level management DB 380 (step S3406). The city indicator name, the infrastructure indicator name, the result of the correlation analysis between the city indicator name and the infrastructure indicator name calculated in step S3406, and the estimation flag are respectively set as the city indicator name 380a, the infrastructure indicator name 380b, the correlation level 380c, and the estimation flag 380d of the record registered in the correlation level management DB 380. The estimation flag 380d is set with the method that has been described with reference Fig. 6. As the method for the correlation analysis, various methods such as a method using a Pearson product-moment correlation coefficient to set values smaller than 0.4 as 0, or a method using casual loop diagram (CLD) may be employed.

A case where the method using a Pearson product-moment correlation coefficient is employed is described in detail. First, combination data (p, q) between the indicator value 370d (= p) for the city indicator and the indicator value 370d (= q) for the infrastructure indicator is generated for each combination between the city indicator (each indicator with "city indicator" as the indicator type 370b, for example, the indicator with "number of days NOX exceeding standard" as the indicator name 370c) and the infrastructure indicator (each indicator with " infrastructure indicator " as the indicator type 370b, for example, the indicator with " average speed at peak time " as the indicator name 370c) from all the records acquired in step S3405. Then, (covariance of the variable p and the variable q) / (standard deviation of the variable p × standard deviation of the variable q) is calculated as the correlation coefficient of the corresponding combination between the city indicator and the infrastructure indicator.

The correlation coefficient values to be calculated are in the range between -1 and 1. Here, the following processing may be performed with the values smaller than 0.4 regarded as small positive correlation to be set as 0, and values smaller than 0 regarded as no positive correlation to be set as 0, or regarded as negative correlation to be treated differently from the positive correlation.

Next, the CPU 301 outputs the correlation display screen shown in Fig. 8 to the display device 306 based on the data in the correlation level management DB 380. Then, under the KPI specification program 340, the CPU 301 receives the at least one city indicator name expected to be the task of the city for which the infrastructure KPI is to be specified, from the input device 305 (S3407).

Next, the CPU 301 reads all the records corresponding to the at least one city indicator name designated in step S3407 from the correlation level management DB 380, adds up the correlation levels 380c for each set of records with the same infrastructure indicator name 380b, and registers the result in the KPI management DB 390. Here, the infrastructure indicator name 380b and the total correlation level 380c for the infrastructure indicator name 380b calculated in this step are registered as the KPI390a and the importance level 390b of the record registered in the KPI management DB 390 (S3408).

Highly frequent and accurate source data may be transmitted from the sensing device 200 to be displayed on the input device 305. To achieve this, first, as source data for calculating the KPI (= infrastructure indicator) identified to have a high importance level in this step (three KPIs with the highest importance levels for example), all the records with the indicator name 360b in the calculation formula management DB 360 corresponding to the infrastructure indicator are acquired. Then, the source data pieces included in the calculation formulae 360c are sequentially checked, from the one with the highest priority 360d (that is, 1) to see whether the corresponding city is included in the source data management DB 350. Then, an instruction to improve the timing and accuracy of the sensing is issued to the sensing program 210 of the sensing apparatus 200 that has transmitted the source data thus found.

Then, the CPU 301 terminates the KPI specification processing under the KPI specification program 340 (S3409).

With the embodiment described above, a method of calculating the correlation level for each combination between the city indicator and the infrastructure indicator and selecting the city indicator as an issue of the corresponding city to calculate the infrastructure KPI of the corresponding city with the importance level can be provided.

The present invention, exemplarily described above based on the city indicator and the infrastructure indicator, may be applied to various types of indicators. For example, the present invention may be applied to an indicator related to power to improve failure determination and maintenance/operation.

The present invention is not limited to the embodiment described above, and includes various modifications. For example, the embodiment described above is described in detail only to describe the present invention, and thus the present invention does not necessarily include all the configurations described above. The configuration of a certain embodiment may be partially replaced by another configuration, deleted, or be provided with another configuration. The configurations, the functions, the processing units, the processing means, and the like described above may at least partially be designed with an integrated circuit (IC) for example to be implemented with hardware. Information such as programs, tables, and files for implementing the functions may be stored in a recording device such as a memory, a hard disk, and a solid state drive (SSD) or a recording medium such as an IC card, a secure digital (SD) card, and a digital versatile disk (DVD).

## Claims

1. A KPI specification apparatus (300) comprising:
a calculation processing unit that processes received data; and
a storage device (303) that is connected to the calculation processing unit and stores a plurality of city indicators and a plurality of infrastructure indicators for each city, wherein
the calculation processing unit calculates a correlation level between a designated city indicator among the plurality of city indicators and an infrastructure indicator related to the designated city indicator, and adds up the correlation levels for each of the infrastructure indicators to calculate an importance level (390b).

2. The KPI specification apparatus (300) according to claim 1, wherein the calculation processing unit calculates the correlation level for each of combinations between the plurality of city indicators and the plurality of infrastructure indicators.

3. The KPI specification apparatus (300) according to claim 1 or 2, wherein the calculation processing unit performs, for at least two of the plurality of city indicators or the plurality of infrastructure indicators, clustering based on an indicator value of each city to identify combinations of a same cluster, and identify a city in the same cluster.

4. The KPI specification apparatus (300) according to at least one of claims 1 to 3, wherein the calculation processing unit calculates the correlation level between the city indicator and the infrastructure indicator for the city in the same cluster.

5. The KPI specification apparatus (300) according to at least one of claims 1 to 4, wherein
the calculation processing unit stores at least one calculation formula for each of the city indicators and the infrastructure indicators, and
adds, to the calculation formula, a priority (360d) of the calculation and an estimation flag indicating whether the calculation formula is based on estimation.

6. The KPI specification apparatus (300) according to at least one of claims 3 to 5, wherein
source data for calculating the indicator value is stored in the storage device (303), and
the calculation processing unit calculates the indicator value for each city from the source data and the calculation formula in descending order of the priority (360d).

7. The KPI specification apparatus (300) according to claim 5 or 6, wherein when calculating the correlation level by using the city indicator or the infrastructure indicator to which the estimation flag is added, the calculation processing unit adds the estimation flag to the correlation level.

8. The KPI specification apparatus (300) according to at least one of claims 5 to 7, wherein
the calculation processing unit displays the correlation level between the city indicator and the infrastructure indicator in each cell of a matrix having two axes respectively indicating the city indicator and the infrastructure indicator, for a combination of the city indicator, the infrastructure indicator, the correlation level, and the estimation flag that are stored in the storage device (303), and
when the estimation flag indicates the estimation, the calculation processing unit displays a notification indicating that the estimation flag indicates the estimation.

9. The KPI specification apparatus (300) according to at least one of claims 1 to 8, wherein the correlation level is calculated based on a method using a Pearson product-moment correlation coefficient or casual loop diagram (CLD).

10. The KPI specification apparatus (300) according to at least one of claims 3 to 9, wherein the clustering is performed based on Ward's method or k-means clustering.

11. A KPI specification method in a KPI specification apparatus including a calculation processing unit and a storage device connected to the calculation processing unit, the method comprising:
storing, in the storage device, a plurality of city indicators and a plurality of infrastructure indicators for each city;
calculating, by the calculation processing unit, a correlation level between a designated city indicator among the plurality of city indicators and an infrastructure indicator related to the designated city indicator; and
adding up the correlation levels for each of the infrastructure indicators to calculate an importance level (390b).

12. The KPI specification method according to claim 11, wherein the calculation processing unit calculates the correlation level for each of combinations between the plurality of city indicators and the plurality of infrastructure indicators.

13. The KPI specification method according to claim 11 or 12, wherein the calculation processing unit performs, for at least two of the plurality of city indicators or the plurality of infrastructure indicators, clustering based on an indicator value of each city to identify combinations of a same cluster, and identify a city in the same cluster.

14. The KPI specification method according to at least one of claims 11 to 13, wherein the calculation processing unit calculates the correlation level between the city indicator and the infrastructure indicator for the city in the same cluster.

15. The KPI specification method according to at least one of claims 11 to 14, wherein
the calculation processing unit stores at least one calculation formula for each of the city indicators and the infrastructure indicators,
the calculation processing unit adds, to the calculation formula, a priority (360d) of the calculation and an estimation flag indicating whether the calculation formula is based on estimation,
source data for calculating the indicator value is stored in the storage device,
the calculation processing unit calculates the indicator value for each city from the source data and the calculation formula in descending order of the priority (360d),
when calculating the correlation level by using the city indicator or the infrastructure indicator to which the estimation flag is added, the calculation processing unit adds the estimation flag to the correlation level,
the calculation processing unit displays the correlation level between the city indicator and the infrastructure indicator in each cell of a matrix having two axes respectively indicating the city indicator and the infrastructure indicator, for a combination of the city indicator, the infrastructure indicator, the correlation level, and the estimation flag that are stored in the storage device, and
when the estimation flag indicates the estimation, the calculation processing unit displays a notification indicating that the estimation flag indicates the estimation.
